Europäisches Patentamt

European Patent Office

Office européen des brevets

(19)

(11) Veröffentlichungsnummer : **0 136 532**
**B1**

(12) EUROPÄISCHE PATENTSCHRIFT

(45) Veröffentlichungstag der Patentschrift :
20.01.88

(51) Int. Cl.⁴ : **A 61 C   8/00**

(21) Anmeldenummer : **84110218.9**

(22) Anmeldetag : **28.08.84**

(54) **Enossales Implantat zur Befestigung von festsitzendem Zahnersatz.**

(30) Priorität : **03.09.83 DE 3331868**

(43) Veröffentlichungstag der Anmeldung :
**10.04.85 Patentblatt 85/15**

(45) Bekanntmachung des Hinweises auf die Patenterteilung : **20.01.88 Patentblatt 88/03**

(84) Benannte Vertragsstaaten :
**AT BE CH FR GB IT LI LU NL SE**

(56) Entgegenhaltungen :
**EP-A- 0 015 599**
**DE-A- 1 961 531**
**DE-A- 2 836 152**
**DE-B- 2 413 883**
**DE-U- 8 136 255**
**GB-A- 2 063 680**
**US-A- 4 081 908**

(73) Patentinhaber : **IMPLANTO-LOcK Gesellschaft mit beschränkter Haftung für Implantatforschung und Entwicklung**
**Ness 1**
**D-2000 Hamburg 11 (DE)**

(72) Erfinder : **Koch, Werner Lutz**
**Lönsweg 7**
**D-3073 Liebenau (DE)**

(74) Vertreter : **Richter, Werdermann & Gerbaulet**
**Neuer Wall 10**
**D-2000 Hamburg 36 (DE)**

**Beschreibung**

Die Erfindung betrifft ein enossales Implantat zur Befestigung von festsitzendem Zahnersatz der im Oberbegriff des Anspruchs 1 genannten Art.

Durch die DE-B-24 13 883 ist ein enossales Implantat der betreffenden Art bekannt, bei dem in die Gewindebohrung des in den Kieferknochen einbringbaren Teils ein Gewindefutter mit Außengewinde aus nachgiebigem Material auswechselbar eingeschraubt ist, das eine Gewindebohrung aufweist, in die ein Gewindezapfen des anderen, zur Befestigung des festsitzenden Zahnersatzes dienenden Gewindeteils eingeschraubt ist, derart, daß sich die beiden Teile nicht berühren. Durch diese elastische Zwischenlage in Form eines Gewindefutters soll der Zahnhalteapparat eines natürlichen Zahnes imitiert werden. Durch die Verschraubbarkeit ist ein Auswechseln und Abstimmen der Nachgiebigkeit des Gewindefutters in bezug auf die gewünschte imitierende Wirkung möglich.

Dieses bekannte Implantat erfüllt gestellte Forderungen hinsichtlich Imitation des Zahnhalteapparates und der Abstimmbarkeit voll und ganz, jedoch hat sich gezeigt, daß die Verschraubungsflächen des Gewindefutters zu Infektionen führen können. Die Ursache hierfür liegt darin, daß das nachgiebige Material des Gewindefutters einer Alterung unterworfen ist und sich dadurch die Anlagekräfte verringern und Spalte entstehen, in denen sich Bakterien festsetzen oder bilden können, die zu Entzündungen führen.

Hinzu kommt der Nachteil der abnehmenden Stabilität der Verschraubung und damit der Veränderung der imitierten mechanischen Werte. Aus diesem Grunde war es erforderlich, die Gewindefutter in Zeitabständen von etwa einem halben Jahr auszuwechseln. Dies ist nicht nur nachteilig für den Patienten, sondern auch aufwendig in der Behandlung und führt außerdem zu dem Nachteil, daß wegen der Häufigkeit des Auswechselns Beschädigungen der miteinander zu verschraubenden Teile vorkommen, die von vornherein eine Undichtigkeit in bezug auf Bakterien darstellen.

Zur Vermeidung dieser Nachteile ist eine Weiterbildung dieses bekannten Implantats bekannt, bei der auf den in einen Kieferknochen einbringbaren Teil des Pfostens eine Distanzhülse aus Metall mit Präzisionspassung aufgesetzt ist. Diese Distanzhülse verlegt den in bezug auf Bakterienbildung kritischen, oben beschriebenen Teil der Verschraubung mit dem Gewindefutter aus nachgiebigem Material in einen Bereich entfernt von dem Kiefer bzw. Zahnfleisch, so daß dadurch die Gefahr einer Entzündung verringert ist. Eine Infektion wird jedoch nicht grundsätzlich ausgeschlossen, und außerdem bestehen weiterhin die Nachteile, die durch die Alterung des nachgiebigen Materials des Gewindefutters hervorgerufen werden, nämlich Verringerung der Verschraubungskraft und Spaltbildung, Veränderung der imitierten mechanischen Werte, Notwendigkeit der Auswechslung nach kürzeren Abständen und Beschädigung der Teile beim Auswechseln.

Der Erfindung liegt die Aufgabe zugrunde, ein enossales Implantat der betreffenden Art zu schaffen, bei dem die Nachteile des bekannten Implantats vermieden sind, bei dem sich also keine Bakterienherde bilden und Entzündungen entstehen können, bei dem keine Lockerung auftreten kann und bei dem insbesondere die Zeitabstände für eine Auswechslung vergrößert sind.

Die der Erfindung zugrundeliegende Aufgabe wird durch die im Kennzeichen des Anspruchs 1 angegebene Lehre gelöst.

Die erfindungsgemäße Lehre beruht auf dem Grundgedanken, daß die wesentlichen Nachteile des bekannten Implantats dadurch entstehen, daß das nachgiebige Material selbst zur Schraubbefestigung dient und daß dadurch bei Alterung des nachgiebigen Materials die Verschraubung beeinträchtigt und damit die Spalt- und Bakterienherdbildung ermöglicht wird. Die Erfindung sieht daher eine Lösung vor, bei der das Zwischenlager aus nachgiebigem Material fest zwischen zwei nicht aus diesem Material bestehenden Teilen angeordnet ist, z. B. durch Verklebung oder Vergießen, so daß die Verbindungsflächen überhaupt nicht durch Verschraubungskräfte belastet sind und ein Nachgeben des Materials somit auch nicht zu einer Verringerung der Dichtigkeit und Festigkeit führen kann.

Um in der bekannten Weise die durch die nachgiebige Zwischenlage imitierten mechanischen Werte des Zahnhalteapparates abstimmen zu können und außerdem weiterhin das Einheilen des Implantats ohne aufgesetzten anderen Teil des Pfostens, der im Endzustand über das Zahnfleisch hinausragt, zu ermöglichen, ist auch bei dem erfindungsgemäßen Implantat eine Verschraubung vorgesehen, jedoch erfolgt diese zwischen Teilen, die nicht aus nachgiebigem Material bestehen, z. B. aus. Metall, so daß die Verschraubung völlig dauerhaft ist. Die Verschraubungsflächen können ohne weiteres im kritischen Bereich dicht oberhalb des Zahnfleisches oder sogar in dessen Bereich liegen, weil die Paßflächen zwischen den Verschraubungsteilen ohne Schwierigkeiten so genau, z. B. durch Drehen, herstellbar sind, daß eine Dichtigkeit erreicht ist, die das Eindringen von Bakterien unmöglich macht.

Von besonderem Vorteil ist bei der erfindungsgemäßen Ausführungsform die Möglichkeit, die Zwischenlage fest mit den Mitteln zur Befestigung von Zahnersatz einerseits und mit dem anderen Teil des Pfostens andererseits zu verbinden, z. B. zu verkleben oder zu vergießen. Durch die dadurch bedingte innige Verbindung sind Spaltbildungen und damit Infektionen praktisch ausgeschlossen.

Um eine zu große Belastung der Bindungsstellen zwischen dem nachgiebigen Material der Zwischenlage und den benachbarten Teilen zu vermeiden, ist es gemäß Anspruch 3 zweckmäßig, daß das andere Teile eine Ausnehmung aufweist, in die ein Fortsatz der Mittel zur Befestigung des Zahnersatzes mit Zwischenraum eingreift. Die in dem Zwischenraum angeordnete Zwischenlage ist somit weitgehend formschlüssig gefangen, so daß die Bindungsflächen minimal belastet sind. Zweckmäßigerweise ist damit die Ausnehmung eine Bohrung und der Fortsatz ein zylindrischer Zapfen.

Eine besonders zweckmäßige Weiterbildung der Erfindung besteht darin, daß das andere Teil des Pfostens als Dehnschraube ausgebildet ist. Dadurch ist eine Sicherung gegen Lösen, insbesondere durch kleine Torsionskräfte oder Drehbewegungen, gegeben. Die Dehnschraube läßt sich in sehr einfacher Weise als zylindrischer Schaft ausbilden, der mit enger Passung in eine Bohrung in dem einen Teil des Pfostens eingreift. Diese enge formschlüssige Halterung vermeidet Bewegungen der Pfostenteile zueinander und schließt auch die Bildung feiner Räume aus, in die Bakterien eindringen können.

Bei der zylindrischen Ausbildung des Schaftes der Dehnschraube sind die zum Halten dieses einen Teils des Pfostens in dem anderen Teil erforderlichen Kräfte gering. Danach genügt am Ende der Dehnschraube ein schwacher, im Durchmesser zweckmäßigerweise auch dünnerer Gewindezapfen zu einer sicheren Verbindung.

Weitere Einzelheiten und Vorteile der Erfindung sollen nachfolgend anhand der Zeichnung näher erläutert werden.

Fig. 1 ist ein Teilschnitt durch ein Ausführungsbeispiel eines enossalen Implantats gemäß der Erfindung,

Fig. 2 ist eine Seitenansicht der Fig. 1 und

Fig. 3 ist ein Schnitt III-III durch Fig. 2.

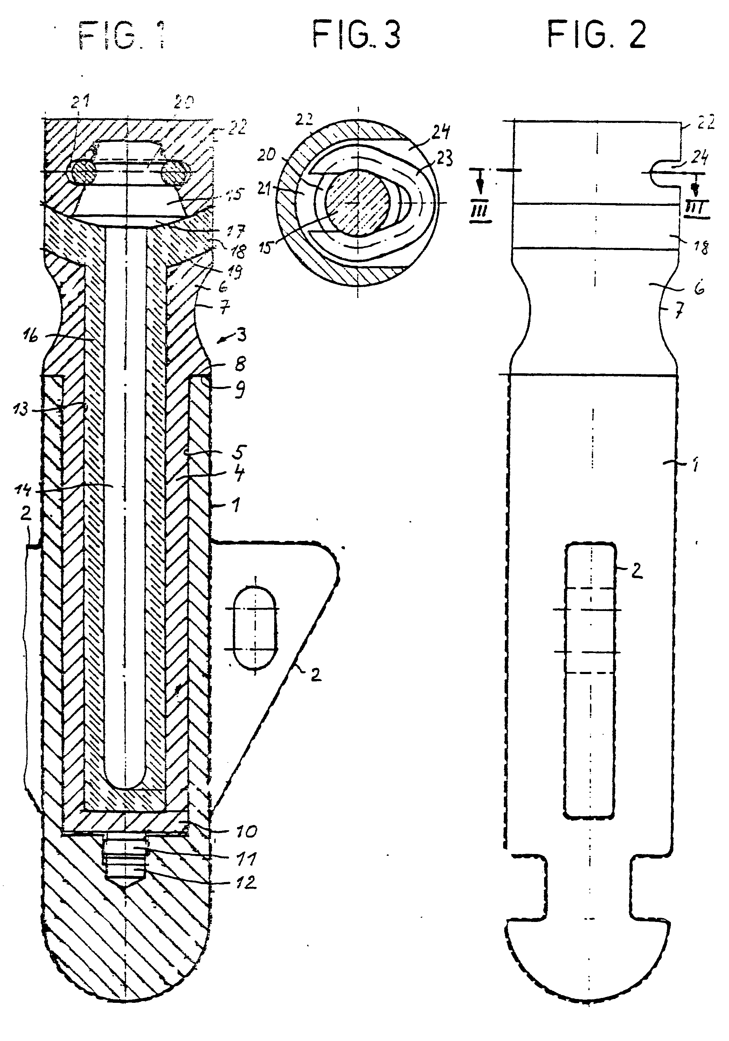

Das in den Fig. 1 bis 3 dargestellte Implantat gemäß einem Ausführungsbeispiel der Erfindung weist einen Pfosten auf, dessen eines Teil 1, das zusätzlich mit Verankerungslaschen 2 versehen ist, in einen Kieferknochen einbringbar ist, sowie ein anderes Teil 3, das mit einem zylindrischen Schaft 4 mit enger Passung in eine Bohrung 5 eingreift und in dieser spielfrei gehalten ist. An seinem oberen Ende weist das andere Teil 3 einen Kopf 6 auf, in dem sich eine seitliche Einschnürung 7 befindet, die bei eingesetztem Implantat in der Höhe des Zahnfleisches bzw. des Austritts daraus liegt. Der Kopf 6 bildet auf seiner Unterseite eine Anschlagkante 8, die gegen eine Oberkante 9 des einen Pfostenteils 1 mit enger Passung stöbt, so daß in den zwischen beiden gebildeten Spalt keine Bakterien eindringen können.

Ein unteres Ende 10 des Schaftes 4 endet kurz vor dem Boden der Bohrung 5 und ist mit einem Gewindezapfen 11 versehen, der in eine entsprechende Gewindebohrung 12 eingeschraubt ist. Im eingeschraubten Zustand dehnt sich der lange Schaft 4 etwas, so daß dieser auch bei Belastung sicher gehalten ist.

In dem anderen Teil 3 bzw. in Schaft 4 und Kopf 6 befindet sich eine Bohrung 13, in die ein als zylindrischer Zapfen 14 ausgebildeter Fortsatz an einem Konus 15 so eingreift, daß ein Zwischenraum gebildet ist, in dem eine Zwischenlage 16 aus nachgiebigem Material, z. B. Kunststoff, angeordnet ist. Die Unterseite des Konus 15 bildet eine Auflagefläche 17, die auf einem flanschartigen Teil 18 der Zwischenlage 16 aufliegt. Der flanschartige Teil liegt auf der Unterseite 6 auf einer Auflagefläche 19 am oberen Ende des Kopfes 6 auf. Die Auflageflächen 17 und 19 sind kalottenförmig. Sämtliche Flächen der Zwischenlage 16 bzw. des flanschartigen Teils aus nachgiebigem Material, die mit Flächen benachbarter Teile in Kontakt stehen, haften fest an diesen, sind also z. B. verklebt oder vergossen.

Wie das insbesondere aus der Fig. 1, oberer Teil, zu ersehen ist, befindet sich in der äußeren konischen Fläche des Konus 15 eine umlaufende Rille 20, der radial gegenüber sich eine Rille 21 in der komplementären inneren konischen Paßfläche eines Befestigungsteils 22/befindet. In diese Rillen 20 und 21 greift eine im wesentlichen U-förmige Haltefeder 23 ein, die so beide Teile 15 und 22 fest miteinander verbindet. Zum Einsetzen der U-förmigen Haltefeder 23 ist in dem Befestigungsteil 22 ein seitlicher Schlitz 24 vorgesehen. Diese Verbindung ist spielfrei und leicht lösbar. Darüber hinaus werden Torsionskräfte nicht übertragen, so daß auch das andere Teil des Pfostens nicht mit diesen Kräften belastet wird und sich daher nicht lösen kann.

Bei Verwendung des in den Fig. 1 bis 3 dargestellten Implantats wird zunächst in einen Kieferknochen eine zu dem einen Teil 1 des Pfostens im wesentlichen komplementäre Ausnehmung gefräst und das Teil 1 eingesetzt. Dabei ist die Bohrung 5 durch ein dem anderen Teil 3 des Pfostens ähnliches, jedoch nur einen kurzen Kopf aufweisendes Teil geschlossen, über dem auch das Zahnfleisch geschlossen wird, so daß das Teil 1 fest einheilen kann. Danach wird das Zahnfleisch über dem Teil 1 perforiert, der Verschluß der Bohrung 5 entfernt und ein anderes Teil 3 fest eingeschraubt, wobei die mechanischen Eigenschaften der nachgiebigen Zwischenlage 16 bzw. des flanschartigen Teils 18 entsprechend den gewünschten zu imitierenden Werten des Zahnhalteapparates ausgewählt sind. In diesem Zustand steht im wesentlichen der Konus 15 frei vor, so daß darauf das Befestigungsteil 22 gesetzt werden kann, das inzwischen mit einem Zahnersatz verbunden worden ist. Da das Befestigungsteil 22 mit seiner komplementären konischen Paßfläche vorgefertigt und genau an die Konusfläche des Konus 15 angepaßt ist, ist eine hohe Paßgenauigkeit gegeben. Die Befestigung des Befestigungsteils 22 mit dem daran sitzenden Zahnersatz erfolgt durch seitliches Einschieben der Haltefeder 23, die jederzeit zum Zwecke von Inspektionen oder zur Reinigung herausgenommen werden kann, um so den Zahnersatz abnehmen zu können.

**Patentansprüche**

1. Enossales Implantat Zur Befestigung von festsitzendem Zahnersatz, mit einem Pfosten, der aus zwei miteinander verschraubbaren Teilen (1, 3) besteht, von denen das eine Teil (1) in einen Kieferknochen einbringbar ist und eine Gewindebohrung (12) aufweist, in die ein Gewindezapfen (11) des anderen (3), mit Mitteln (14, 15) zur Befestigung des Zahnersatzes versehenen Teils auswechselbar einschraubbar ist, und mit einer zwischen dem in den Kieferknochen einbringbaren Teil (1) und den Mitteln (14, 15) zur Befestigung des Zahnersatzes angeordneten Zwischenlage (16) aus nachgiebigem Material, dadurch gekennzeichnet, daß die Zwischenlage (16) zwischen den Mitteln (14, 15) zur Befestigung des Zahnersatzes und dem anderen Teil (3) des Pfostens angeordnet ist.

2. Enossales Implantat nach Anspruch 1, dadurch gekennzeichnet, daß die Zwischenlage (16) fest mit den Mitteln (14, 15) zur Befestigung von Zahnersatz und dem anderen Teil (3) des Pfostens verbunden, insbesondere verklebt oder vergossen ist.

3. Enossales Implantat nach Anspruch 1, dadurch gekennzeichnet, daß das andere Teil (3) eine Ausnehmung aufweist, in die ein Fortsatz der Mittel (14, 15) zur Befestigung des Zahnersatzes mit Zwischenraum eingreift, in dem die Zwischenlage (16) angeordnet ist.

4. Enossales Implantat nach Anspruch 3, dadurch gekennzeichnet, daß die Ausnehmung eine Bohrung (5) ist und daß der Forsatz ein zylindrischer Zapfen (14) ist.

5. Enossales Implantat nach Anspruch 1, dadurch gekennzeichnet, daß der andere Teil (3) des Pfostens als Dehnschraube ausgebildet ist.

6. Enossales Implantat nach Anspruch 5, dadurch gekennzeichnet, daß die Dehnschraube einen zylindrischen Schaft (4) hat, der mit enger Passung in einer Bohrung (5) in dem einen Teil (1) des Pfostens eingreift.

7. Enossales Implantat nach Anspruch 6, dadurch gekennzeichnet, daß der zylindrische Schaft (4) einen wesentlich größeren Durchmesser als der am Ende des anderen Teils (3) des Pfostens befindliche Gewindezapfen (11) hat.

8. Enossales Implantat nach Anspruch 3, dadurch gekennzeichnet, daß die Mittel (14, 15) zur Befestigung des Zahnersatzes eine Auflagefläche (17) bilden, die einer Auflagefläche (19) am äußeren Ende des anderen Teils (3) des Pfostens mit Zwischenraum gegenüberliegt, und daß sich in diesen Zwischenraum ein flanschförmiger Teil (18) der nachgiebigen Zwischenlage (16) erstreckt.

9. Enossales Implantat nach Anspruch 8, dadurch gekennzeichnet, daß die beiden Auflageflächen (17, 19) kalottenförmig sind.

10. Enossales Implantat nach Anspruch 3, dadurch gekennzeichnet, daß sich der Fortsatz (14) an einem sich von dem Fortsatz (14) weg verjüngenden, zur Befestigung des Zahnersatzes dienenden Konus (15) befindet.

11. Enossales Implantat nach den Ansprüchen 8 und 10, dadurch gekennzeichnet, daß die Auflagefläche (17) der Mittel (15) zur Befestigung des Zahnersatzes von der dem Fortsatz (14) zugewandten Basisfläche des Konus (15) gebildet ist.

12. Enossales Implantat nach Anspruch 10, dadurch gekennzeichnet, daß der Konus (15) in seiner konischen Fläche eine umlaufende Rille (20) zur Befestigung des Zahnersatzes aufweist.

13. Enossales Implantat nach Anspruch 5, dadurch gekennzeichnet, daß die Dehnschraube einen sich in Axialrichtung erstreckenden Kopf (6) aufweist.

14. Enossales Implantat nach Anspruch 13, dadurch gekennzeichnet, daß der Kopf (6) eine umlaufende abgerundete Einschnürung (7) aufweist.

**Claims**

1. Endosseous implant for anchoring fixed dental prosthesis with one post comprising two portions (1, 3) each of which can be screwed to the other, one portion (1) of which being introducable into the jaw bone and having a threaded hole (12), into which a threaded pin (11) of the other (3) part, which is fitted with a means (14, 15) for fastening the dental prosthesis, can be screwed to allow exchange, and an intermediate layer (16) of soft material positioned between the portion (1) which is introducable into the jaw and the means (14, 15) for fastening the dental prosthesis, characterized in that the intermediate layer (16) lies between the means (14, 15) for fastening the dental prosthesis and the other portion (3) of the post.

2. Endosseous implant according to claim 1, characterized in that the intermediate layer (16) is firmly connected, in particular by bonding or casting, with the means (14, 15) for fastening the dental prosthesis and the other portion (3) of the post.

3. Endosseous implant according to claim 1, characterized in that the other portion (3) has a recess into which is inserted an extension of the means (14, 15) for fastening the dental prosthesis, with an intermediate area, in which the intermediate layer (16) is positioned.

4. Endosseous implant according to claim 3, characterized in that the recess is a bore hole (5) and that the extension is a cylindrical bolt (14).

5. Endosseous implant according to claim 1, characterized in that the other portion (3) of the post is arranged in the form of an extension screw.

6. Endosseous implant according to claim 5, characterized in that the extension screw has a cylindrical shank (4) which, with a tight fit in a bore hole (5) reaches into the one portion (1) of the post.

7. Endosseous implant according to claim 6, characterized in that the cylindrical shaft (4) has a diameter which is very much larger than the threaded pin (11) at the end of the other portion (3) of the post.

8. Endosseous implant according to claim 3, characterized in that the means (14, 15) for fastening the dental prosthesis form a supporting surface (17) which is opposite to a supporting surface (19) on the outer end of the other portion (3) of the post with intermediate layer and that a flange-type portion (18) of the soft intermediate layer (16) extends into this area.

9. Endosseous implant according to claim 8, characterized in that the two supporting surfaces (17, 19) are concave.

10. Endosseous implant according to claim 3, characterized in that the extension (14) is positioned on a cone (15) tapering from the extension (14) and serving to fasten the dental prosthesis.

11. Endosseous implant according to claims 8 and 10, characterised in that the supporting surface (17) of the means (15) for fastening the dental prosthesis is formed by the basic surface of the cone (15) directed towards the extension (14).

12. Endosseous implant according to claim 10, characterized in that the cone (15) has a surrounding groove (20) in its cone surface for fastening the dental prosthesis.

13. Endosseous implant according to claim 5, characterized in that the extension screw has a head (6) extending in the direction of the axis.

14. Endosseous implant according to claim 13, characterized in that the head (6) has a surrounding, rounded contraction (7).

## Revendications

1. Implant énossal pour l'ancrage d'une prothèse dentaire fixe comportant un montant qui consiste en deux pièces (1, 3) pouvant être vissées l'une à l'autre, l'une des pièces (1) pouvant être mise en place dans un maxillaire et présentant une forure filetée (12) dans laquelle une goupille filetée (11) de l'autre pièce (3), qui est pourvue de moyens (14, 15) d'ancrage de la prothèse dentaire, peut être vissée de manière à pouvoir être remplacée et comportant une couche intermédiaire (16) en matière souple placée entre la pièce (1) pouvant être mise en place dans le maxillaire et les moyens (14, 15) d'ancrage de la prothèse dentaire, caractérisé en ce que la couche intermédiaire (16) est placée entre les moyens (14, 15) d'ancrage de la prothèse dentaire et l'autre pièce (3) du montant.

2. Implant énossal selon la revendication 1, caractérisé en ce que la couche intermédiaire (16) est reliée de manière fixe, en particulier en ce qu'elle est collée ou coulée, aux moyens (14, 15) d'ancrage de la prothèse dentaire et à l'autre pièce (3) du montant.

3. Implant énossal selon la revendication 1, caractérisé en ce que l'autre pièce (3) présente un creux dans lequel un prolongement des moyens (14, 15) d'ancrage de la prothèse dentaire s'engrène avec un espace intermédiaire dans lequel la couche intermédiaire (18) est placée.

4. Implant énossal selon la revendication 3, caractérisé en ce que le creux est une forure (5) et que le prolongement est un tourillon cylindrique (14).

5. Implant énossal selon la revendication 1, caractérisé en ce que l'autre pièce (3) du montant est formée comme une vis à tige allégée.

6. Implant énossal selon la revendication 5, caractérisé en ce que la vis à tige allégée a une tige cylindrique (4) qui s'engrène avec un ajustement étroit dans une forure (5) dans l'une des pièces (1) du montant.

7. Implant énossal selon la revendication 6, caractérisé en ce que la tige cylindrique (4) a un diamètre considérablement supérieur à celui de la goupille filetée (11) qui se situe à l'extrémité de l'autre pièce (3) du montant.

8. Implant énossal selon la revendication 3, caractérisé en ce que les moyens (14, 15) d'ancrage de la prothèse dentaire forment une surface d'appui (17) qui est située en face d'une surface d'appui (19) à l'extrémité extérieure de l'autre pièce (3) du montant avec espace intermédiaire et qu'une pièce (18) en forme de bride de la couche intermédiaire souple (16) se trouve dans cet espace intermédiaire.

9. Implant énossal selon la revendication 8, caractérisé en ce que les deux surfaces d'appui (17, 19) ont la forme de calottes.

10. Implant énossal selon la revendication 3, caractérisé en ce que le prolongement (14) se trouve sur un cône (15), servant à l'ancrage de la prothèse dentaire, qui est effilé à partir du prolongement (14).

11. Implant énossal selon les revendications 8 et 10, caractérisé en ce que la surface d'appui (17) des moyens (15) d'ancrage de la prothèse dentaire est formée à partir de la surface de base du cône (15) tournée vers le prolongement (14).

12. Implant énossal selon la revendication 10, caractérisé en ce que le cône (15) présente sur sa surface conique une rainure de pourtour (20) pour l'ancrage de la prothèse dentaire.

13. Implant énossal selon la revendication 5, caractérisé en ce que la vis à tige allégée présente une tête (6) qui se trouve dans le sens axial.

14. Implant énossal selon la revendication 13, caractérisé en ce que la tête (8) présente un rétrécissement (7) arrondi de pourtour.

FIG. 1

FIG. 3

FIG. 2